# EUROPÄISCHE PATENTSCHRIFT

(11) **EP 1 429 141 B1**
(45) Veröffentlichungstag und Bekanntmachung des Hinweises auf die Patenterteilung: **16.04.2008**
(21) Anmeldenummer: 03024244.0
(22) Anmeldetag: 22.10.2003
(51) Int. Cl.: G01N 29/14

(54) **Verfahren und Vorrichtung zur zerstörungsfreien Prüfung eines rohrförmigen Bauteiles**
Method and apparatus for non destructive testing of a cylindrical piece
Procédé et dispositif de contrôle non-destructif d'une pièce cylindrique

(30) Priorität: 12.12.2002 DE 10258355
(43) Veröffentlichungstag der Anmeldung: 16.06.2004
(73) Patentinhaber: Volkswagen AG, 38436 Wolfsburg (DE)
(72) Erfinder: Brinkmann, Horst, 38228 Salzgitter (DE); Menthe, Klaus, 38239 Salzgitter (DE); Niessen, Frank, 31228 Peine (DE)
(74) Vertreter: Scheffler, Jörg

(56) Entgegenhaltungen:
- US-A- 4 577 487
- US-A- 5 554 810

## Beschreibung

Die Erfindung betrifft ein Verfahren zur zerstörungsfreien Prüfung eines rohrförmigen Bauteiles auf eine mögliche Schädigung einer Wandfläche durch eine Körperschallmessung. Weiterhin betrifft die Erfindung eine Vorrichtung zur Durchführung des Verfahrens.

Ein solches Verfahren und eine solche Vorrichtung sind beispielsweise in der DE 040 366 84 C1 beschrieben, die sich auf die Prüfung von Wasserrohrnetzen bezieht. Aufgrund der Veränderung des Körperschalls kann dabei auf mögliche Defekte geschlossen werden. Mit Hilfe eines Mikrofons, dessen Bestandteile hochempfindliche Piezo-Scheiben umfassen, wird der Körperschall gemessen und angezeigt. Hierzu sind Schallaufnehmer an dem entsprechenden Wasserrohrnetzteil angeordnet und mit einer Piezo-Scheibe der Vorrichtung starr verbunden.

Weiterhin beschreibt die DE 41 03 808 C2 eine Einrichtung zur zerstörungsfreien Riss- und Abmessungsprüfung von dünnwandigen rohrförmigen Elementen. Hierzu hat die Vorrichtung mehrere Ultraschallwandler, die an einer Prüfstation angebracht sind, durch die ein zu prüfendes Metallrohr axial oder longitudinal hindurchläuft. Dabei sind das Rohr und die Wandler in ein Bad mit einem geeigneten flüssigen Kopplungsmittel, wie beispielsweise Wasser, eingetaucht, das dazu dient, eine wirksame Kopplung der stark fokussierten Bündel von prüfenden Ultraschall-Energiepulsen herzustellen, die durch den Wandler emittiert werden. Da sich das Rohr bewegt, folgen diese Prüfbündel einzelnen Abtastbahnen über die Wandfläche des Rohres. Die Pulsrate des Wandlers ist dabei ausreichend schnell, um eine intensive Prüfung des gesamten Rohrquerschnittes auf sowohl dimensionale Akzeptanz als auch auf das Vorhandensein von Rissen sicherzustellen, die ein Echo in einem jeweiligen Prüffenster hinterlassen.

Bei einem Verfahren und einer Vorrichtung zum Erkennen von Veränderungen an einem Bauteil einer Turbine gemäß der DE 41 27 395 A1 wird ein Schallspektrum des während des Betriebes der Turbine in deren Inneren emittierten Körperschalls gemessen und die Abweichung des Messwertes von einem Normwert bestimmt. Zur Erhöhung der Signalintensitäten des erfassten Schallspektrums werden die Bauteile bei bestimmten Betriebszuständen der Turbine beispielsweise in Form einer Klangprobe mit Hilfe eines Schallgebers von außen zur Schallemission angeregt. Hierzu wird eine Sonde durch eine Öffnung in das Innere der Turbine eingeführt.

Weiterhin beschreibt auch die DE 41 16 471 A1 ein Verfahren und eine Einrichtung zur automatischen Prüfung der Rissfreiheit von keramischen und metallischen Produkten, beispielsweise gepresste Bauteile, bei denen durch einen Umformprozess Störungen oder Änderungen in der Gefügestruktur auftreten können. Diese Störungen oder Änderungen werden durch eine Schwingungs- oder Klangänderung festgestellt, die bei einem Schlag mittels eines metallischen Stößels auftritt.

Als nachteilig hat es bei allen vorstehend genannten Verfahren und Vorrichtungen erwiesen, dass die möglichen Schädigungen erst im Betrieb oder zumindest im eingebauten Zustand des Bauteiles ermittelt werden können. Hierdurch werden jedoch unnötige Kosten verursacht. Weiterhin gestatten die Messwerte keinen Rückschluss auf die Ursache der Schädigung, weil das schädigende Ereignis dabei nicht bestimmt werden kann. Ferner erfordern diese Vorrichtungen eine äußere Anregung zur Emission wobei zugleich mögliche Umgebungseinflüsse zu Messfehlern führen können.

Außerdem bezieht sich auch die DE 40 22 258 A1 auf ein Verfahren und eine Anordnung zur Ermittlung von Schädigungsgrenzen mittels einer Schallemissionsanalyse. Der Druck wird dabei kontinuierlich bis zum erstmaligen Überschreiten eines Schallemissionsgrenzwertes erhöht und anschließend bis zum Bersten des Prüfkörpers gesteigert. Nach einer Ausführungsform wird dabei der Innendruck des Prüfkörpers verändert. Als nachteilig erweist sich dabei jedoch die Zerstörung des Bauteiles bei der Durchführung des Verfahrens.

Die Dokumente US 4 577 487 und US 5 554 810 offenbaren Verfahren und Vorrichtungen zur zerstörungsfreien Prüfung von Druckbehältern auf eine mögliche Schädigung einer Wandfläche durch eine Körperschallmessung, bei dem das Gefäß mit einem Druckmedium beaufschlagt wird und mittels eines Sensors der während der Innenhochdruck-Umformung emittierte Körperschall detektiert wird.

Vor diesem Hintergrund liegt der Erfindung die Aufgabe zugrunde, ein wesentlich verbessertes Verfahren zur zerstörungsfreien Prüfung von rohrförmigen Bauteilen zu schaffen. Insbesondere soll das Verfahren mit geringem Aufwand durchführbar sein. Weiterhin soll eine Vorrichtung zur Durchführung des Verfahrens geschaffen werden.

Die erstgenannte Aufgabe wird mit einem Verfahren zur zerstörungsfreien Prüfung gemäß den Merkmalen des Patentanspruchs 1 gelöst. Die Unteransprüche betreffen besonders zweckmäßige Weiterbildungen der Erfindung.

Erfindungsgemäß ist also ein Verfahren vorgesehen, bei dem das Bauteil dichtend verschlossen und mit einem Druckmedium beaufschlagt wird, wobei mittels eines Sensors, der während der Innenhochdruck-Umformung emittierte Körperschall detektiert, und durch Vergleich mit Sollwerten eine schädigungsbedingte Abweichung erfasst wird. Hierdurch können mittels des Verfahrens bereits während des Herstellungsprozesses des Bauteiles mögliche Schädigungen, beispielsweise Rissbildungen, erfasst und die geschädigten Bauteile unmittelbar ausgeschleust werden. Solche Bauteile gelangen daher nicht in den weiteren Fertigungsprozess. Zugleich kann das Verfahren zeitgleich während des Umformverfahrens durchgeführt werden, so dass sich eine wesentliche Reduzierung der Herstelldauer ergibt. Weiterhin können auf diese Weise bereits aufgetretene Schädigungen dokumentiert werden und zugleich als Steuerungsgröße bei nachfolgenden Umformungsprozessen einfließen, um so die Ursachen für das schädigende Ereignis bestimmen zu können. Es ist zur Durchführung des Verfahrens ferner auch keine äußere Anregung erforderlich, weil die Körperschallanregung bereits durch das eingeleitete Druckmedium erfolgt. Daher ist eine Zugänglichkeit zu der Oberfläche des Bauteiles entbehrlich.

Eine besonders vorteilhafte Ausgestaltung des erfindungsgemäßen Verfahrens wird auch dadurch erreicht, dass mittels des Sensors das Austreten des Druckmediums aus einer bei der Umformung auftretenden Durchbrechung der Wandfläche des Bauteils detektiert wird. Hierdurch kann in einfacher Weise durch das Körperschallmessverfahren ermittelt werden, ob an der Wandfläche eine unerwünschte Durchbrechung, beispielsweise eine Rissbildung, bei der Druckbeaufschlagung eingetreten ist. Zur Qualitätsbestimmung sind daher keine weiteren Maßnahmen, insbesondere keine nachgeschalteten Druckprüfungen, erforderlich, wodurch sich der Herstellungsaufwand weiter reduzieren lässt.

Dabei hat es sich als besonders zweckmäßig erwiesen, wenn das Bauteil mit einer Emulsion als Druckmedium beaufschlagt wird. Eine auf die Umformungseigenschaften des Bauteiles abgestimmte Emulsion wird dabei derart ausgewählt, dass bei einer umformungsbedingten Schädigung des Bauteiles ein charakteristisches Körperschallsignal ausgelöst wird. Hierdurch wird die Erfassung einer auftretenden Schädigung weiter vereinfacht.

Eine weitere besonders vorteilhafte Ausgestaltung der vorliegenden Erfindung wird auch dadurch erreicht, dass mittels des Sensors Körperschall im Frequenzbereich zwischen 70 und 100 kHz detektiert wird. Hierdurch können auftretende und auf eine mögliche Schädigung zurückzuführende Unregelmäßigkeiten bei der Umformung optimal erfasst und zugleich Messfehler aufgrund von Umgebungseinflüssen vermieden werden.

Grundsätzlich ist das Verfahren für Bauteile unterschiedlicher Werkstoffzusammensetzungen einsetzbar, durch die zugleich auch die geeigneten Druckverhältnisse vorbestimmt sind. Als besonders praxisnah hat sich jedoch eine Abwandlung des erfindungsgemäßen Verfahrens erwiesen, bei der das Bauteil mit einem Druck zwischen 1000 und 3000 bar beaufschlagt wird.

Weiterhin erweist sich eine Ausgestaltung des Verfahrens als besonders erfolgversprechend, wenn der detektierte Körperschall als Regelgröße in die Prozesssteuerung, insbesondere Drucksteuerung einfließt. Hierdurch können unerwünschte, zu einer möglichen Schädigung führende Umformungsparamter, bereits frühzeitig erfasst und entsprechende Gegenmaßnahmen eingeleitet werden. Der Ausschussanteil kann dadurch weiter verringert werden.

Die zweitgenannte Aufgabe, eine Vorrichtung zur zerstörungsfreien Prüfung eines rohrförmigen Bauteiles zur Durchführung des Verfahrens zu schaffen, wird mit einem zur Aufnahme des Bauteiles bestimmten Werkzeug, einer Druckmittelzufuhr zum Innenhochdruck-Umformen des Bauteiles und mit zumindest einem das rohrförmige Bauteil dichtend verschließenden Verschluss, wobei die Vorrichtung mit einem Sensor zur Erfassung des bei der Umformung auftretenden Körperschalls ausgestattet ist, gelöst. Hierdurch kann die Vorrichtung zur zerstörungsfreien Prüfung mit geringem Aufwand an bereits vorhandenen Umformvorrichtungen angeordnet werden und dadurch die Prozesssicherheit wesentlich erhöht werden, indem eine auftretende Schädigung nicht erst bei einem nachfolgenden Prüfdurchlauf, sondern bereits während des Herstellungsprozesses des Bauteiles erkennbar ist. Derart geschädigte Bauteile gelangen daher nicht in den nachfolgenden Produktionsprozess. Zudem verringert die Integration der Prüfvorrichtung in die Umformvorrichtung den wirtschaftlichen Aufwand. Weiterhin können mittels einer Steuereinheit mögliche Fehlerursachen ermittelt und daher eine ständige Verbesserung der Fertigungsqualität realisiert werden. Die Körperschallanregung erfolgt dabei unmittelbar durch das einströmende Druckmedium bzw. durch die Druckerhöhung.

Der Sensor kann grundsätzlich an einer beliebigen Position an der Vorrichtung angeordnet sein. Besonders einfach ist hingegen eine Ausführungsform, bei welcher der Sensor an dem Verschluss angeordnet ist und dadurch mit geringem Aufwand zugleich bei dem Verschließen der Öffnung des Bauteiles einen zuverlässigen Kontakt zu dem Bauteil hat. Der Sensor ist dabei von dem Druckmedium entlastet und liegt zugleich außerhalb des Verformungsbereiches des Bauteiles.

Dabei ist es besonders einfach, wenn der Sensor ein Piezoelement aufweist, um so eine hohe Genauigkeit und Empfindlichkeit bei der Messwerterfassung sicherzustellen.

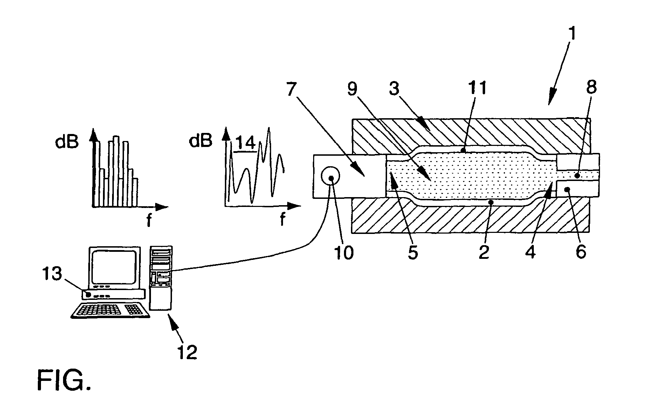

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in einer Prinzipskizze eine erfindungsgemäße Vorrichtung 1 zur zerstörungsfreien Prüfung eines rohrförmigen Bauteiles 2, insbesondere einer Achskomponente für die Fahrzeugfertigung, während des Herstellungsprozesses. Hierzu wird das vorgeformte rohrförmige Bauteil 2 in ein Werkzeug 3 eingelegt und beide Öffnungen 4, 5 jeweils mittels eines Verschlusses 6, 7 druckdicht verschlossen. Während der erste Verschluss 6 eine Druckmittelzufuhr 8 für ein Druckmedium 9 aufweist, ist an dem zweiten Verschluss 7 ein als Piezoelement ausgeführter Sensor 10 zur Erfassung des umformungsbedingten Körperschalls im Bereich zwischen 70 und 100 kHz ausgestattet. Hierdurch kann eine Schädigung einer Wandfläche 11 des Bauteiles 2, beispielsweise eine Rissbildung, aufgrund des dabei austretenden Druckmediums als Körperschallanregung von dem Sensor 10 erfasst und einer Steuerung 12 übermittelt sowie mit Hilfe einer Auswerteeinheit 13 dargestellt werden. Die Prüfung kann daher zeitgleich während des Herstellungsprozesses erfolgen, so dass eine auftretende Schädigung bereits frühzeitig erkennbar ist. Weiterhin können mittels der Steuerung 12 mögliche Fehlerursachen ermittelt und daher eine ständige Verbesserung der Fertigungsqualität realisiert werden. Zugleich steht dabei eine ermittelte Messkurve 14 als Prüfungsprotokoll für die weitere Dokumentation und zur statistischen Auswertung unmittelbar zur Verfügung.

### BEZUGSZEICHENLISTE

- 1: Vorrichtung
- 2: Bauteil
- 3: Werkzeug
- 4: Öffnung
- 5: Öffnung

- 6: Verschluss
- 7: Verschluss
- 8: Druckmittelzufuhr
- 9: Druckmedium
- 10: Sensor

- 11: Wandfläche
- 12: Steuerung
- 13: Auswerteeinheit
- 14: Messkurve

## Patentansprüche

1. Verfahren zur zerstörungsfreien Prüfung eines rohrförmigen Bauteiles (2) auf eine mögliche Schädigung einer Wandfläche (11) durch eine Körperschallmessung, bei dem das Bauteil dichtend verschlossen und mit einem Druckmedium beaufschlagt wird, wobei mittels eines Sensors (10) der während der Innenhochdruck-Umformung emittierte Körperschall detektiert und durch Vergleich mit Sollwerten eine schädigungsbedingte Abweichung erfasst wird.

2. Verfahren nach Anspruch 1, **dadurch gekennzeichnet, dass** mittels des Sensors das Austreten des Druckmediums aus einer bei der Umformung auftretenden Durchbrechung der Wandfläche des Bauteils detektiert wird.

3. Verfahren nach den Ansprüchen 1 oder 2, **dadurch gekennzeichnet, dass** das Bauteil mit einer Emulsion als Druckmedium beaufschlagt wird.

4. Verfahren nach zumindest einem der vorangehenden Ansprüche, **dadurch gekennzeichnet, dass** mittels des Sensors Körperschall im Frequenzbereich zwischen 70 und 100 kHz detektiert wird.

5. Verfahren nach zumindest einem der vorangehenden Ansprüche, **dadurch gekennzeichnet, dass** das Bauteil mit einem Druck zwischen 1000 und 3000 bar beaufschlagt wird.

6. Verfahren nach zumindest einem der vorangehenden Ansprüche, **dadurch gekennzeichnet, dass** der detektierte Körperschall als Regelgröße in die Prozesssteuerung, insbesondere Drucksteuerung einfließt.

7. Vorrichtung (1) zur zerstörungsfreien Prüfung eines rohrförmigen Bauteiles (2), mit einem zur Aufnahme des Bauteiles (2) bestimmten Werkzeug (3), einer Druckmittelzufuhr (8) zum Innenhochdruck-Umformen des Bauteiles (2), wobei die Vorrichtung (1) mit einem Sensor (10) zur Erfassung des bei der Umformung auftretenden Körperschalls ausgestattet ist, **gekennzeichnet durch** zumindest einen das rohrförmige Bauteil (2) dichtend verschließenden verschluss (6, 7).

8. Vorrichtung (1) nach Anspruch 7, **dadurch gekennzeichnet, dass** der Sensor (10) an dem Verschluss (6, 7) angeordnet ist.

9. Vorrichtung (1) nach Anspruch 7 oder 8, **dadurch gekennzeichnet, dass** der Sensor (10) ein Piezoelement aufweist.

## Claims

1. Method for the non-destructive testing of a tubular component (2) for possible damage to a wall surface (11) by means of a structure-borne noise measurement, in which method the component is tightly closed and a pressure medium is admitted to it, wherein the structure-borne noise emitted during the hydroforming is detected by means of a sensor (10) and a deviation caused by damage is detected by comparison with setpoint values.

2. Method according to Claim 1, **characterized in that** the escape of the pressure medium from a rupture, occurring during the forming, of the wall surface of the component is detected by means of the sensor.

3. Method according to Claim 1 or 2, **characterized in that** an emulsion is admitted as pressure medium to the component.

4. Method according to at least one of the preceding claims, **characterized in that** structure-borne noise within the frequency range of between 70 and 100 kHz is detected by means of the sensor.

5. Method according to at least one of the preceding claims, **characterized in that** a pressure of between 1000 and 3000 bar is applied to the component.

6. Method according to at least one of the preceding claims, **characterized in that** the detected structure-borne noise flows as controlled variable into the process control, in particular the pressure control.

7. Apparatus (1) for the non-destructive testing of a tubular component (2), comprising a tool (3) intended for accommodating the component (2) and a pressure-medium feed (8) for the hydroforming of the component (2), wherein the apparatus (1) is equipped with a sensor (10) for detecting the structure-borne noise occurring during the forming, **characterized by** at least one closure (6, 7) tightly closing the tubular component (2).

8. Apparatus (1) according to Claim 7, **characterized in that** the sensor (10) is arranged on the closure (6, 7).

9. Apparatus (1) according to Claim 7 or 8, **characterized in that** the sensor (10) has a piezoelectric element.

## Revendications

1. Procédé de contrôle non destructif d'un composant (2) de forme tubulaire en vue d'y déceler un éventuel dommage d'une surface de paroi (11) par une mesure des bruits de structure, avec lequel le composant est fermé hermétiquement et soumis à un fluide sous pression, les bruits de structure émis pendant la déformation provoquée par la haute pression interne étant détectés au moyen d' un capteur (10) et un écart lié à un dommage étant détecté par une comparaison avec des valeurs de consigne.

2. Procédé selon la revendication 1, **caractérisé en ce que** la sortie du fluide sous pression par un transpercement de la surface de la paroi du composant, provoqué lors de la déformation, est détectée au moyen du capteur.

3. Procédé selon les revendications 1 ou 2, **caractérisé en ce que** le composant est soumis à une émulsion en tant que fluide sous pression.

4. Procédé selon au moins l'une des revendications précédentes, **caractérisé en ce que** des bruits de structure dans la gamme de fréquences de 70 à 100 kHz sont détectés au moyen du capteur.

5. Procédé selon au moins l'une des revendications précédentes, **caractérisé en ce que** le composant est soumis à une pression comprise entre 1000 et 3000 bar.

6. Procédé selon au moins l'une des revendications précédentes, **caractérisé en ce que** les bruits de structure détectés interviennent en tant que grandeur de régulation dans la commande du procédé, notamment dans la commande de la pression.

7. Dispositif (1) de contrôle non destructif d'un composant (2) de forme tubulaire, comprenant un outil (3) conçu pour recevoir le composant (2), une arrivée de fluide sous pression (8) destinée à une déformation provoquée par la haute pression interne du composant (2), le dispositif (1) étant équipé d'un capteur (10) pour détecter les bruits de structure qui se produisent lors de la déformation, **caractérisé par** au moins un dispositif d'obturation (6, 7) qui ferme hermétiquement le composant (2) de forme tubulaire.

8. Dispositif (1) selon la revendication 7, **caractérisé en ce que** le capteur (10) est monté sur le dispositif d'obturation (6, 7).

9. Dispositif (1) selon la revendication 7 ou 8, **caractérisé en ce que** le capteur (10) comprend un élément piézoélectrique.
